# EUROPÄISCHE PATENTSCHRIFT

(11) **EP 2 503 054 B1**
(45) Veröffentlichungstag und Bekanntmachung des Hinweises auf die Patenterteilung: **19.12.2018**
(21) Anmeldenummer: 12156366.2
(22) Anmeldetag: 21.02.2012
(51) Int. Cl.: D21C 5/02, D21C 9/08, D21C 9/147, D21C 9/153, D21B 1/32

(54) **Verfahren zur Aufbereitung einer Faserstoffsuspension**
Method for preparing a fibrous suspension
Procédé de préparation d'une suspension de matière fibreuse

(30) Priorität: 22.02.2011 DE 102011011960
(43) Veröffentlichungstag der Anmeldung: 26.09.2012
(73) Patentinhaber: Messer Austria GmbH, 2352 Gumpoldskirchen (AT); Messer Schweiz AG, 5600 Lenzburg (CH)
(72) Erfinder: Gutenberger, Helmut, 4652 Fischlhalm (AT); Schlatter, Robert, 5606 Dintikon (CH)
(74) Vertreter: Münzel, Joachim R.

(56) Entgegenhaltungen:
- EP-A1- 2 172 591
- EP-A2- 0 514 901
- EP-A2- 0 588 704
- DE-C2- 19 751 174
- IE-A1- 922 752
- US-A- 4 372 812

## Beschreibung

Die Erfindung betrifft ein Verfahren zur Aufbereitung einer Faserstoffsuspension zur Herstellung von Papier oder Pappe, bei dem ein Faserstoff in Wasser zu einer Suspension aufgelöst wird, die Suspension einem physikalischen Trennprozess zur Abtrennung von Fremdstoffen unterworfen und anschließend einer Bleiche unterzogen wird.

Als "Faserstoff" sollen hier ganz allgemein für die Herstellung von Papier oder Pappe übliche Ausgangsmaterialien wie Altpapier, Holzschliff, Holzstoff, TMP (thermomechanisch hergestellter Zellstoff), Zellstoff oder eine Kombinationen aus einigen oder allen diesen Komponenten verstanden werden. Vor einer Bleichung werden diese Faserstoffe von Fremdstoffen gereinigt. Beispielsweise wird Altpaper bei der Verwendung als Rohstoff für die Papierherstellung in Wasser zu einer Suspension aufgeschwemmt und anschließend in mehreren physikalischen Trennschritten von Fremdstoffen gereinigt. Zu den physikalischen Trennschritten gehört insbesondere eine ein- oder mehrstufigen Grobsortierung, in der Fremdstoffe, wie beispielsweise Glas, Metalle, Folien und dergleichen, mittels Zentrifugalreinigern und/oder Sieben von den Altpapierfasern abgetrennt werden, sowie ein oder mehrere Flotationen, in denen die Altpapierfasern von Farbteilchen befreit werden.

Weiterhin umfasst die Vorbehandlung vor der Bleichung häufig einen zusätzlichen Verfahrensschritt zur Entfernung von Kleberresten ("Stickies"). Ein solcher ist in der EP 1 900 871 A2 beschrieben. Bei diesem Gegenstand wird durch Zuführen eines kryogenen Kältemittels, beispielsweise flüssiges Kohlendioxid oder Flüssigstickstoff, ein Temperaturschock in der Suspension erzeugt, durch den die in der Faserstoffsuspension enthaltenen Kleberreste einen großen Teil ihrer Klebefähigkeit einbüßen und Hilfe der erwähnten physikalischen Trennverfahren aus der Suspension entfernt werden können.

Im Anschluss an die genannten physikalischen Trennprozesse wird die Faserstoffsuspension in einer Bleiche aufgehellt, entwässert und zur Weiterverarbeitung einer Papiermaschine zugeführt. Flotation und Bleichung können auch mehrfach hintereinander wiederholt werden, bevor der Altpapierstoff einer Papiermaschine zugeführt wird.

Zum Bleichen des Altpapierstoffs kommen verschiedene Verfahren zur Anwendung. In der DE 44 43 229 A1 wird beispielsweise ein zweistufiges Bleichverfahren beschrieben, bei dem der Altpapierstoff zunächst mit Wasserstoffperoxid und anschließend mit Natriumhydrosulfit behandelt wird. Beide Stoffe sind jedoch als gesundheitsschädlich einzustufen und führen zu entsprechend erhöhten Sicherheitsanforderungen im Produktionsprozess.

Aus der DE 197 51 174 C2 ist ein ebenfalls zweistufiges Verfahren bekannt, das mit Sauerstoff als Bleichmittel arbeitet. Dabei wird der Faserstoffsuspension reiner Sauerstoff oder mit Sauerstoff angereicherte Luft zugeführt. Um zu verhindern, dass in der mitgeführten Luft oder dem Wasser der Suspension gelöster molekularer Stickstoff die Bleichwirkung hemmt, wird die Suspension vor der eigentlichen Sauerstoffbleichung einer Spülung mit Sauerstoff unterzogen. Durch diese Sauerstoffspülung wird etwaig in der Suspension noch vorhandener Stickstoff zumindest teilweise durch Sauerstoff verdrängt. Die Verwendung von Sauerstoff als Bleichmittel in Faserstoffsuspensionen hat jedoch insbesondere den Nachteil, dass dadurch die bei der Verarbeitung von Altpapier hochproblematische Aktivität aerober Mikroorganismen gefördert wird, mit der Folge, dass die Suspension aufwändig mit Bioziden nachbehandelt werden muss.

Bekannt ist ferner das Bleichen von Zellstoff mittels Chlor, Chlordioxid oder Ozon. Während die Bleiche mit Chlor bzw. Chlordioxid zu erheblichen Belastungen für die Umwelt führt, ist die Bleiche mit Ozon sehr kostenintensiv und aufgrund der stark oxidierenden Wirkung des Ozons nicht unproblematisch. Um die mit der konzentrierten Ozonbleichung verbundenen Probleme zu umgehen, wird in der EP 0 588 704 A2 ein Verfahren zum Bleichen von Zellstoff vorgeschlagen, bei dem die Zellstoffsuspension mit einem Gemisch aus Sauerstoff und Ozon mit einem Ozongehalt von bevorzugt 6 bis 10 Vol.-% behandelt wird. Dieses Verfahren ist aufgrund der erheblichen Menge an benötigtem Ozon sehr kostenintensiv; zudem bestünde bei der Anwendung in Altpapiersuspensionen auch hier das Problem, dass die mikrobiologische Aktivität aufgrund des hohen Sauerstoffanteils gefördert würde.

Die Aufgabe der vorliegenden Erfindung ist daher, ein Verfahren zum Bleichen einer Faserstoffsuspension, insbesondere einer Altpapiersuspension anzugeben, das die Nachteile der aus dem Stand der Technik bekannten Verfahren vermeidet.

Gelöst ist diese Aufgabe bei einem Verfahren gemäss Anspruch 1. Das erfindungsgemäße Verfahren sieht also ein zweistufiges Bleichverfahren vor. In der ersten Stufe wird eine Behandlung mit Sauerstoff einer Reinheit von mindestens 90 Vol.-%, bevorzugt mindestens 95 Vol.-% durchgeführt. Der Sauerstoff wird dazu in Gasform oder als Flüssigprodukt einem Tank oder einer Rohrleitung entnommen oder in geeigneten Anlagen, wie beispielsweise einer kryogenen Luftzerlegungsanlage, einer Druckwechseladsorptionsanlage (VPSA) oder Membrananlage vor Ort erzeugt. Im zweiten, sich an die Sauerstoffbehandlung anschließenden Schritt erfolgt eine Behandlung mit Ozon einer Konzentration zwischen 10 und 25 Vol.-%. Durch das Ozon wird einerseits die Bleichung weiter verbessert und andererseits aufgrund der hochgradig bakteriziden Wirkung des Ozons die mikrobiologische Aktivität in der Papiersuspension gehemmt. Durch die Kombination der Ozonbleiche mit einem vorangehenden Schritt der Sauerstoffbehandlung kann zudem die Menge an eingesetztem Ozon gegenüber einer reinen Ozonbleiche bei zumindest annähernd gleichem Bleichergebnis deutlich reduziert und so in erheblichem Umfang Kosten eingespart werden. Der Sauerstoff kann auch in der Flotation anstelle von Luft in den Prozess eingebracht werden um den Stickstoffanteil in der Suspension zu reduzieren und auch den Weisgrad vor der Bleiche zu erhöhen. Das erfindungsgemäße Verfahren kann auch mehrmals hintereinander durchgeführt werden. Auf den Einsatz von Chlor oder Chlorverbindungen kann durch das erfindungsgemäße Verfahren sowohl in der Bleiche als auch in der Bekämpfung der mikrobiellen Aktivität verzichtet werden.

Um Synergien beim Einsatz der Gase zu nutzen wird bei der Sauerstoffbehandlung zumindest zum Teil Sauerstoff eingesetzt, der bei der Ozonbehandlung freigesetzt wurde. Die Ozonbehandlung wird dabei bevorzugt mit einem Gasgemisch durchgeführt, das neben Ozon auch Sauerstoff enthält, insbesondere handelt es sich dabei um ein O₃/O₂-Gasgemisch. Bei der Ozonbehandlung fällt ein sauerstoffreiches Gas als Restgas an, das zudem noch geringe Mengen von Ozon (ca. 0,1 bis 2 Vol-%) enthält. Der Restsauerstoff sowie Sauerstoff, der durch Vernichtung des Restozons erzeugt wurde wird dabei gegebenenfalls einer Reinigungsstufe unterworfen und nachfolgend wieder zur Sauerstoffbehandlung und/oder zur Ozonerzeugung genutzt.

Bevorzugt erfolgt vor der Bleichung ein weiterer Behandlungsschritt, in welchem der Faserstoffsuspension Kohlendioxid zugesetzt wird, um die Bildung von Kalkablagerungen zu bekämpfen. Durch diesen kann die Ablagerungsneigung unter Berücksichtigung des Langelier - Index minimiert werden. Der Langelier - Index, oft auch Langelier - Sättigungsindex genannt (im Folgenden kurz "LSI") gibt die Ablagerungsneigung von Wasser an. Liegt der LSI zwischen -0,5 und +0,5 herrscht Gleichgewicht im System. Liegt der LSI unter -0,5 besteht Korrosionsgefahr. Ist der LSI höher als 0,5 besteht die Gefahr von Kalkablagerungen. Durch die Zufuhr von Kohlendioxid kann der LSI auf einen Gleichgewichtswert zwischen -0,5 und 0,5 gebracht werden. Auch vorstellbar ist es durch eine in Abhängigkeit von Messgrößen, z.B. dem pH-Wert, gesteuerte Regelung der zugeführten Kohlendoxidmenge den LSI auf einen vorgegebenen Wert von z.B. etwa Null zu regeln. Der Eintrag des Kohlendioxids erfolgt zweckmäßigerweise in der Weise, dass Kohlendioxid unter Druck verflüssigt herangeführt und innerhalb der Suspension entspannt wird. Damit wird zugleich ein Temperaturschock innerhalb der Faserstoffsuspension ausgelöst, der zur Beseitigung von Kleberresten ausgenutzt werden kann.

Bevorzugt wird dabei das bei der Kohlendioxidbehandlung eingesetzte Kohlendioxid durch Verbrennen eines Brennstoffs, insbesondere eines Kohlenwasserstoffs, mit Sauerstoff erzeugt, der bei der Ozonbehandlung freigesetzt wurde. Dadurch wird ein weiterer Synergieeffekt erzielt und die Wirtschaftlichkeit des Verfahrens erhöht.

Der Sauerstoff befindet sich beim Eintrag in die Suspension während der Sauerstoffbehandlung bevorzugt im verflüssigten oder kalten gasförmigen Zustand befindet.

Eine abermals vorteilhafte Ausgestaltung des erfindungsgemäßen Verfahrens sieht vor, dass nach der Sauerstoffbehandlung und/oder der Ozonbehandlung überschüssiger Sauerstoff aufgefangen und zur Erzeugung von Ozon und/oder Kohlendioxid eingesetzt wird. Durch die Wiederverwendung des überschüssigen Sauerstoffs wird die Wirtschaftlichkeit des Verfahrens abermals erhöht.

In einer gleichfalls vorteilhaften Weiterbildung der Erfindung ist vorgesehen, bei der Ozonbehandlung freigesetzten Sauerstoff als Flotationsmittel bei einer Flotation der Faserstoffsuspension einzusetzen. Dabei wird der Sauerstoff beispielsweise mittels Lanzen in ein die Fasersuspension enthaltendes Flotationsbad eingetragen. Durch den eingetragenen Sauerstoff kann die als Flotationsmittel üblicherweise eingesetzte Luft ganz oder teilweise ersetzt werden, wodurch der Stickstoffanteil in der Suspension reduziert und der Weißgrad vor der Bleiche erhöht wird.

Anhand der Zeichnung soll ein Ausführungsbeispiel der Erfindung näher erläutert werden.

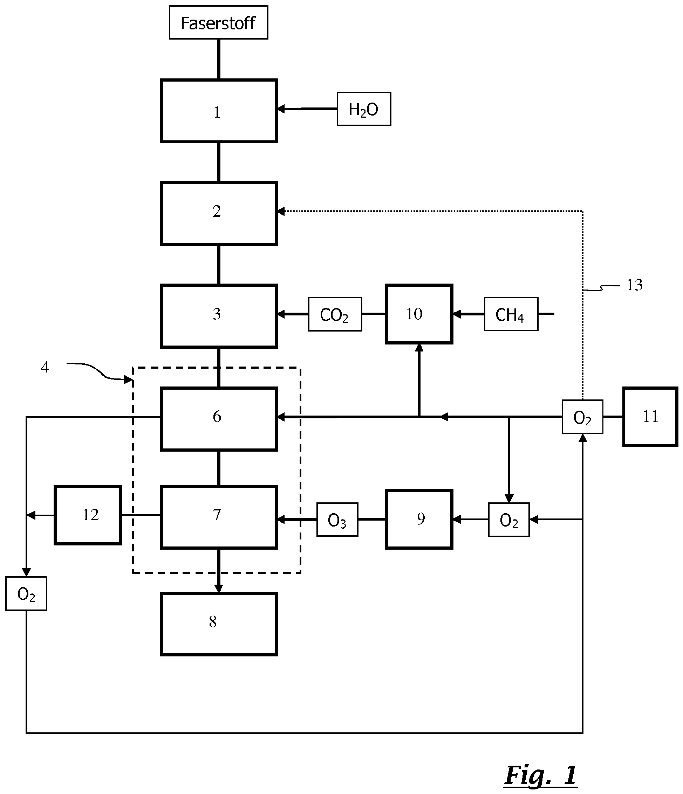

Die einzige Zeichnung (Fig. 1) zeigt schematisch einen erfindungsgemäßen Verfahrensablauf.

Wie an sich bekannt, wird eine Faserstoffsuspension beispielsweise dadurch hergestellt, dass das Ausgangsmaterial in Form von Altpapier und/oder anderen Faserstoffen mit Wasser in einer Auflösung 1 mechanisch und eventuell chemisch so bearbeitet wird, dass eine pumpfähige Faserstoffsuspension entsteht. Die Faserstoffsuspension wird einer Reinigungsstufe 2 zugeführt, in dem Fremdstoffe, wie beispielsweise Metallteile, Glas, Folien, Kleberreste und dergleichen von den Paperfasern getrennt werden. Die Reinigungsstufe 2 umfasst in der Regel mehrere physikalische oder chemische Trennschritte, wie beispielsweise: Flotation, Ausfällung, Sieben, Zentrifugieren, Bindung an kationische Fixiermittel, Schockbehandlung mit tiefkalten kryogenen Medien oder andere bekannte Trennverfahren. Es ist im Rahmen der Erfindung auch vorstellbar, zusätzlich zur Reinigungsstufe 2 weitere Reinigungsstufen vor oder nach der Bleichung durchzuführen.

Im Anschluss an die Reinigungsstufe 2 wird die Faserstoffssuspension in einer Kohlendioxidbehandlung 3 Kohlendioxid zugeführt. Das Kohlendioxid senkt den pH-Wert der Faserstoffsuspension und hemmt dadurch die Ausbildung von Kalkablagerungen (Scaling) und die Bildung von Makrostickies durch Agglomeration von Microstickies. Die von Fremdstoffen zumindest weitgehend befreite und eingedickte Faserstoffsuspension wird anschließend einer Bleiche 4 zugeführt, die erfindungsgemäß in zwei Teilschritte 6, 7 aufgeteilt ist. In einem ersten Teilschritt wird die Faserstoffsuspension einer Sauerstoffbehandlung 6 unterzogen. Hierbei wird Sauerstoff mit einer Konzentration von mindestens 90 Vol.-% in gasförmigem oder verflüssigtem Zustand zugeführt und mit der Faserstoffsuspension vermischt. Durch die Sauerstoffbehandlung 6 wird bereits eine erhebliche Bleichwirkung erzielt. Im Anschluss an die Sauerstoffbehandlung 6 erfolgt eine Ozonbehandlung 7.
Bei der Ozonbehandlung 7 wird die Faserstoffsuspension mit einem ozonhaltigen Gas unter heftigem Rühren bzw. Mischen in Kontakt gebracht. Das ozonhaltige Gas, in der Regel ein Ozon-Sauerstoff-Gemisch, enthält bevorzugt 140-300 g/m³ Ozon und wird mit einem Druck von 1 bis 15 bar, bevorzugt 1,1 bis 10 bar in die Faserstoffsuspension eingetragen. Durch die Ozonbehandlung 7 werden die Fasern in der Faserstoffsuspension weiter gebleicht, zum anderen wird aufgrund der bakteriziden Wirkung des Ozons die mikrobiologische Aktivität in der Faserstoffsuspension unterdrückt. Um die bakterizide Wirkung des Ozons möglichst effektiv auszunutzen ist es zweckmäßig, eine Ozonbehandlung möglichst spät im Bleichprozess durchzuführen. Die erfindungsgemäße Bleiche kann auch in einem mehrstufigen Bleichverfahren einmal oder mehrmals durchgeführt werden.
Im Anschluss an die Bleiche 4 wird die Faserstoffsuspension entwässert und zur Weiterverarbeitung 8 zur Papiermaschine transportiert.

Der für die Sauerstoffbehandlung 6 und die Erzeugung des Ozons für die Ozonbehandlung 7 in einer Anlage zur Ozonerzeugung 9 benötigte Sauerstoff wird in einem Tank 11 oder einer Rohrleitung bereitgestellt oder vor Ort erzeugt. Um die Wirtschaftlichkeit des Verfahrens zu erhöhen, wird im Ausführungsbeispiel der für die Sauerstoffbehandlung 6 eingesetzte Sauerstoff zumindest zum Teil aus Sauerstoff gewonnen, der bei der Ozonbehandlung 7 in Form von sauerstoffreichem Restgas verfügbar wird. Der nach der Ozonbehandlung 7 freiwerdende Sauerstoff wird in einer Anlage zur Kohlendioxidgewinnung 10 mit Brennstoff - im Ausführungsbeispiel Erdgas (Methan) - zu Kohlendioxid verbrannt, welches wiederum in der Kohlendioxidbehandlung 3 zum Einsatz kommt. Um den Sauerstoffverbrauch weiter zu senken wird zusätzlich Sauerstoff, der im Verlauf der Sauerstoffbehandlung 6 und/oder der Ozonbehandlung 7 freigesetzt wird, aufgefangen und der Sauerstoffbleiche oder der Verbrennung zur Kohlendioxidgewinnung 10 zugeführt. Bei der Ozonbehandlung 7 frei werdendes Restozon wird in einem Restozonvernichter 12 in molekularen Sauerstoff umgewandelt und anschließend ebenfalls zur Kohlendioxidgewinnung 10 oder zur Ozonerzeugung 9 genutzt. Weiterhin kann Sauerstoff, wie durch Pfeil 13 angedeutet, aus dem Tank 11 und/oder Sauerstoff, der bei der Ozonbehandlung 7 freigesetzt oder bei der Restozonvernichtung 12 gewonnen wird, als Flotationsmittel in einer in der Reinigungsstufe 2 vorgesehenen Flotation zur Druckfarbenentfernung eingesetzt werden.

Das erfindungsgemäße Verfahren ermöglicht insbesondere eine absolut chlorfreie Papierproduktion, da nicht nur in der Bleiche, sondern auch bei der Bekämpfung der mikrobiologischen Aktivität in der Pulpe auf jedwede Chlor oder Chlorverbindungen verzichtet werden kann. Damit werden sogar die Anforderungen an einen lediglich eine chlorfreie Bleiche durchlaufenden TCF- Faserrohstoff übertroffen.

### Bezuqszeichenliste

- 1: Auflösung
- 2: Reinigungsstufe
- 3: Kohlendioxidbehandlung
- 4: Bleiche
- 5: -
- 6: Sauerstoffbehandlung
- 7: Ozonbehandlung
- 8: Weiterverarbeitung (in einer Papiermaschine)
- 9: Ozonerzeugung
- 10: Kohlendioxidgewinnung
- 11: Tank
- 12: Restozonvernichter
- 13: Pfeil

## Patentansprüche

1. Verfahren zur Aufbereitung einer Faserstoffsuspension zur Herstellung von Papier oder Pappe, bei dem ein Faserstoff in Wasser zu einer Suspension aufgelöst wird, die Suspension einem physikalischen Trennprozess (2) zur Abtrennung von Fremdstoffen unterworfen und anschließend einer Bleiche (4) unterzogen wird,
**dadurch gekennzeichnet, dass** die Bleiche (4) als ein zweistufiges Bleichverfahren ausgebildet ist, das eine Sauerstoffbehandlung (6), in der der Suspension Sauerstoff zugeführt wird, und eine sich daran anschließende Ozonbehandlung (7), in der der Suspension Ozon zugeführt wird, umfasst, und dass bei der Sauerstoffbehandlung (6) zumindest zum Teil Sauerstoff zum Einsatz kommt, der bei der Ozonbehandlung (7) freigesetzt wurde.

2. Verfahren nach einem der vorhergehenden Ansprüche, **dadurch gekennzeichnet, dass** die Faserstoffsuspensionen vor der Bleichung in einer Kohlendioxidbehandlung (3) Kohlendioxid zugesetzt wird, um die Bildung von Kalkablagerungen zu bekämpfen.

3. Verfahren nach Anspruch 2, **dadurch gekennzeichnet, dass** das Kohlendioxid für die Kohlendioxidbehandlung (3) durch Verbrennen eines Brennstoffs mit Sauerstoff erzeugt wird, der bei der Ozonbehandlung (7) freigesetzt wurde.

4. Verfahren nach einem der vorhergehenden Ansprüche, **dadurch gekennzeichnet, dass** sich der Sauerstoff beim Eintrag in die Suspension während der Sauerstoffbehandlung (6) im verflüssigten oder kalten gasförmigen Zustand befindet.

5. Verfahren nach einem der vorhergehenden Ansprüche, **dadurch gekennzeichnet, dass** nach der Sauerstoffbehandlung (6) und/oder Ozonbehandlung (7) anfallender überschüssiger Sauerstoff aufgefangen und zur Erzeugung von Kohlendioxid eingesetzt wird.

6. Verfahren nach einem der vorhergehenden Ansprüche, **dadurch gekennzeichnet, dass** bei der Ozonbehandlung (7) freigesetzter Sauerstoff als Flotationsmittel bei einer Flotation der Faserstoffsuspension eingesetzt wird.

## Claims

1. Method for preparing a fibrous suspension for producing paper or cardboard, in which fibres are dissolved in water to give a suspension, the suspension is subjected to a physical separation process (2) for separating out impurities and subsequently undergoes bleaching (4),
**characterized in that** the bleaching (4) is designed as a two-step bleaching process comprising an oxygen treatment (6) in which oxygen is fed to the suspension, and a subsequent ozone treatment (7), in which ozone is fed to the suspension, and
**in that**, in the oxygen treatment (6), at least part of the oxygen used is oxygen that was released in the ozone treatment (7).

2. Method according to one of the preceding claims, **characterized in that** carbon dioxide is added to the fibrous suspension before the bleaching in a carbon dioxide treatment (3), in order to combat the formation of lime deposits.

3. Method according to Claim 2, **characterized in that** the carbon dioxide for the carbon dioxide treatment (3) is generated by combustion of a fuel with oxygen that was released in the ozone treatment (7).

4. Method according to one of the preceding claims, **characterized in that** the oxygen is in the liquid or cold gaseous state when it is introduced into the suspension during the oxygen treatment (6).

5. Method according to one of the preceding claims, **characterized in that**, after the oxygen treatment (6) and/or ozone treatment (7), any excess oxygen is collected and used for generating carbon dioxide.

6. Method according to one of the preceding claims, **characterized in that**, in the ozone treatment (7), released oxygen is used as flotation agent in flotation of the fibrous suspension.

## Revendications

1. Procédé pour la préparation d'une suspension de matière fibreuse pour la préparation de papier ou de carton, dans lequel une substance fibreuse est désintégrée dans de l'eau en une suspension, la suspension est soumise à un procédé de séparation physique (2) pour la séparation de matières étrangères et ensuite à un blanchiment (4), **caractérisé en ce que** le blanchiment (4) est conçu comme un procédé de blanchiment en deux étapes, qui comprend un traitement à l'oxygène (6), dans lequel de l'oxygène est introduit dans la suspension, et un traitement à l'ozone (7) consécutif, dans lequel de l'ozone est introduit dans la suspension, et **en ce que** l'on utilise, lors du traitement à l'oxygène (6), au moins en partie de l'oxygène qui a été libéré lors du traitement à l'ozone (7).

2. Procédé selon l'une quelconque des revendications précédentes, **caractérisé en ce que** les suspensions de matière fibreuse sont additionnées, avant le blanchiment, dans un traitement au dioxyde carbone (3), de dioxyde de carbone pour lutter contre la formation de dépôts de calcaire.

3. Procédé selon la revendication 2, **caractérisé en ce que** le dioxyde de carbone pour le traitement au dioxyde de carbone (3) est produit par combustion d'un combustible avec de l'oxygène qui a été libéré lors du traitement à l'ozone (7).

4. Procédé selon l'une quelconque des revendications précédentes, en ce que l'oxygène, lors de l'introduction dans la suspension pendant le traitement à l'oxygène (6), se trouve dans un état liquéfié ou gazeux froid.

5. Procédé selon l'une quelconque des revendications précédentes, **caractérisé en ce que** l'oxygène en excès obtenu après le traitement à l'oxygène (6) et/ou après le traitement à l'ozone (7) est récupéré et utilisé pour la production de dioxyde de carbone.

6. Procédé selon l'une quelconque des revendications précédentes, **caractérisé en ce que** l'oxygène libéré lors du traitement à l'ozone (7) est utilisé comme agent de flottation lors d'une flottation de la suspension de matière fibreuse.
